# EUROPEAN PATENT APPLICATION

(11) **EP 1 375 121 A2**
(43) Date of publication of application: **02.01.2004**
(21) Application number: 03013974.5
(22) Date of filing: 20.06.2003
(51) Int. Cl.: B30B 15/04

(54) **Press apparatus**

(30) Priority: 20.06.2002 JP 2002179809; 27.03.2003 JP 2003087998
(71) Applicant: SUMITOMO HEAVY INDUSTRIES, LTD., Shinagawa-ku, Tokyo 141-8686 (JP)
(72) Inventor: Kuroiwa, Hideki, Funabashi-shi, Chiba 274-0824 (JP); Sakaki, Kazutoshi, Fujisawa-shi, Kanagawa 251-0021 (JP)
(74) Representative: Geyer, Ulrich F., Dr. Dipl.-Phys.

(57) **Abstract**

A press apparatus includes a movable member having a mold-mounting surface for mounting a movable mold (24) thereon and at least four guide surfaces (24a); and a guide member (15) having at least four guide surfaces (15a) facing the corresponding guide surfaces (24a) of the movable member (24). Fluid is injected into a space formed between the guide surfaces (24a) of the movable member (24) and the corresponding guide surfaces (15a) of the guide member (15) such that the mutually facing guide surfaces are held in a noncontacting condition.

## Description

### BACKGROUND OF THE INVENTION

### Field of the invention:

The present invention relates to a press apparatus.

### Description of the related art:

Conventionally, molding articles from, for example, glass or resin is carried out by the steps of placing glass material or resin material in a mold of a press apparatus; softening the material through application of heat; and press-molding the softened material. In this case, a molded glass or resin article assumes the shape of a cavity of the mold, which consists of an upper mold and a lower mold. After the molded glass or resin article is obtained, the upper mold is raised so as to open the mold. The molded glass or resin article is unloaded from the lower mold by means of a transfer member having a vacuum means or the like. The thus-unloaded article is transported to the subsequent process.

In such a press apparatus, when positional deviation arises between the upper and lower molds, the following problems arise: a molded article fails to assume a predetermined shape, the upper and lower molds fail to engage with each other, or the upper or lower mold is broken. In order to avoid such problems, when the upper mold is moved vertically, the axis of the upper mold must not deviate or be inclined, and the upper mold must not move in the circumferential direction; i.e., rotate.

In order to meet the above requirements, the conventional press apparatus employs a linear guide mechanism configured such that two to four guide rods are disposed around the upper mold so as to guide a vertical movement of the upper mold (as disclosed in, for example, Japanese Patent Application Laid-Open (*kokai*) No. H08-206895). In this case, guide holes are formed in an upper-mold-mounting member adapted to support the upper mold. The guide rods are inserted into the corresponding guide holes, so that the inner surfaces of the guide holes slide on the corresponding outer surfaces of the guide rods. Generally, bushes are fitted into the corresponding guide holes. Thus, the linear guide mechanism is usually called a linear bush.

When the upper mold is moved vertically, the linear guide mechanism prevents deviation of the axis of the upper mold and rotation of the upper mold.

However, in the conventional press apparatus, the linear bush involves large frictional resistance and great variations in the frictional resistance. Thus, heavy load is imposed on a drive unit for vertically moving the upper mold; therefore, the drive unit must be of large output, resulting in an increase in the cost of manufacturing the press apparatus and running cost.

Even when the drive unit is operated in such a manner as to maintain constant output, variations in frictional resistance lead to variations in a force imposed on the upper mold. Thus, a pressing force which the upper mold applies to a glass or resin material varies; i.e., press-molding cannot be performed at a predetermined pressing force, resulting in impairment in the quality of a molded glass or resin article.

Furthermore, since a gap is unavoidably present between the guide rod and the bush fitted in the guide hole, the guide hole is inclined with respect to the guide rod. Accordingly, the upper mold is inclined, with a resultant failure to maintain parallelism between the mating surface of the upper mold and that of the lower mold. This failure leads to uneven surface of a molded article, variations in thickness among molded articles, or impairment in profile transfer to a molded article. As a result, molded articles fail to exhibit consistent quality. The angle of inclination of the guide hole with respect to the guide rod can be reduced through increasing the length of the sliding surface of the bush. However, in this case, frictional resistance increases.

### SUMMARY OF THE INVENTION

An object of the present invention is to solve the above-mentioned problems in the conventional press apparatus and to provide a press apparatus in which a movable member is not in contact with a guide member, so as to avoid involvement of frictional resistance; to enhance positioning accuracy for the movable member; to reduce load imposed on a drive unit for moving the movable member; and to avoid involvement of positional deviation and inclination of a mold attached to the movable member, thereby enhancing quality of a molded article.

To achieve the above object, a press apparatus of the present invention has a movable member having a mold-mounting surface for mounting a movable mold thereon and at least four guide surfaces; and a guide member having at least four guide surfaces facing the corresponding guide surfaces of the movable member. Fluid is injected into a space formed between the guide surfaces of the movable member and the corresponding guide surfaces of the guide member such that the mutually facing guide surfaces are held in a noncontacting condition.

In this case, since the four guide surfaces of the movable member receive equal forces which are imposed perpendicularly to the guide surfaces, the locus of movement of the movable member does not deviate horizontally. Also, the movable member does not rotate about its axis.

Thus, at the time of mold closing, the movable mold is smoothly engaged with a stationary mold, since a positional relationship is accurately maintained between the mating surface of the movable mold and that of the stationary mold. Also, breakage of the mold can be avoided.

Furthermore, since the movable member and the guide member permit accurate positioning of the mating surfaces of the movable and stationary molds, an engagement mechanism which would otherwise be provided on the molds is not required.

Preferably, the guide surfaces of the movable member or the guide surfaces of the guide member are equipped with corresponding hydrostatic bearings. In this case, since the hydrostatic bearings hold, hydrostatically and in a noncontacting condition, the guide surfaces of the movable member or the guide surfaces of the guide member which face the corresponding hydrostatic bearings, no frictional resistance arises. Thus, the movable member can be moved smoothly in the vertical direction. Therefore, load imposed on the drive unit and the like can be reduced.

Preferably, the movable member has a hollow portion. In this case, the weight of the movable member can be reduced. Thus, the movable member can be move smoothly in the vertical direction and can be positioned accurately by means of the hydrostatic bearings.

Preferably, the movable member has a reinforcement member disposed within the hollow portion. In this case, the weight of the movable member can be reduced. Also, since a beam-like member extends across the hollow portion, even when the guide surfaces of the movable member receive external forces, deflection of the guide surfaces can be reduced to the greatest possible extent.

Preferably, the movable member has a plurality of the hollow portions.

Preferably, a pressure chamber of a drive unit is formed between the guide surfaces of the movable member and the corresponding guide surfaces of the guide member; the movable member has partition walls disposed within the corresponding pressure chambers; and the partition walls are moved by means of pressure of fluid to be supplied into the pressure chambers.

Preferably, piping for supplying fluid to the hydrostatic bearings or pressure chambers runs in the hollow portion.

Preferably, the reinforcement member is disposed within the hollow portion at a position corresponding to the position of the partition walls disposed within the corresponding pressure chambers. In this case, distortion of the movable member stemming from pressure of fluid for driving the partition walls and the hydrostatic bearings can be reduced to the greatest possible extent.

Preferably, the guide member has a pair of opposed first guide members, and a pair of opposed second guide members held between the first guide members, and the distance between the opposed first guide members and the distance between the opposed second guide members can be adjusted.

Preferably, the partition walls are formed on corresponding surfaces of the movable member which face the corresponding first guide members.

Preferably, forces imposed on the movable member from the corresponding hydrostatic bearings are directed toward the center of the movable member and cancel each other.

### BRIEF DESCRIPTION OF THE DRAWINGS

The structure and features of the press apparatus according to the present invention will be readily appreciated as the same becomes better understood by referring to the drawings, in which:
FIG. 1 is a vertical sectional view showing the configuration of a press apparatus according to a first embodiment of the present invention;
FIG. 2 is a sectional view taken along line I-I of FIG. 1;
FIG. 3 is a sectional view showing the structure of the guide surface of a hydrostatic bearing unit in the first embodiment of the present invention;
FIG. 4 is a plan view or view taken along line II-II of FIG. 3 showing the guide surface of the hydrostatic bearing unit in the first embodiment of the present invention;
FIG. 5 is a transverse sectional view showing the configuration of a press apparatus according to a second embodiment of the present invention;
FIG. 6 is a vertical sectional view showing the configuration of a press apparatus according to a third embodiment of the present invention;
FIG. 7 is a sectional view taken along line III-III of FIG. 6;
FIG. 8 is a sectional view taken along line IV-IV of FIG. 6;
FIG. 9 is a sectional view taken along line IV-IV of FIG. 6, showing a fourth embodiment of the present invention;
FIG. 10 is a sectional view taken along line IV-IV of FIG. 6, showing a fifth embodiment of the present invention;
FIG. 11 is a sectional view taken along line III-III of FIG. 6, showing the fifth embodiment of the present invention;
FIG. 12 is a vertical sectional view showing the configuration of a press apparatus according to a sixth embodiment of the present invention;
FIG. 13 is a sectional view taken along line V-V of FIG. 12;
FIG. 14 is a sectional view taken along line VI-VI of FIG. 12;
FIG. 15 is a sectional view taken along line V-V of FIG. 12, showing a modification of the sixth embodiment;
FIG. 16 is a sectional view taken along line V-V of FIG. 12, showing another modification of the sixth embodiment; FIG. 17 is a vertical sectional view showing the configuration of a press apparatus according to a seventh embodiment of the present invention; and
FIG. 18 is a sectional view taken along line VII-VII of FIG. 17.

### DESCRIPTION OF PREFERRED EMBODIMENTS

Embodiments of the present invention will next be described in detail with reference to the drawings. Press apparatus according to the embodiments of the present invention are suited for molding articles from, for example, glass or resin by the major steps of placing glass material or resin material in a mold; softening the material through application of heat; and press-molding the softened material. In molding by use of the press apparatus, no particular limitation is imposed on material for molded articles. Specifically, the press apparatus can be used to mold articles from, for example, metal, ceramic, paper, fiber, or an appropriate mixture of these materials, in addition to glass and resin. For convenience, description of the embodiments refers to the case of molding an article from glass.

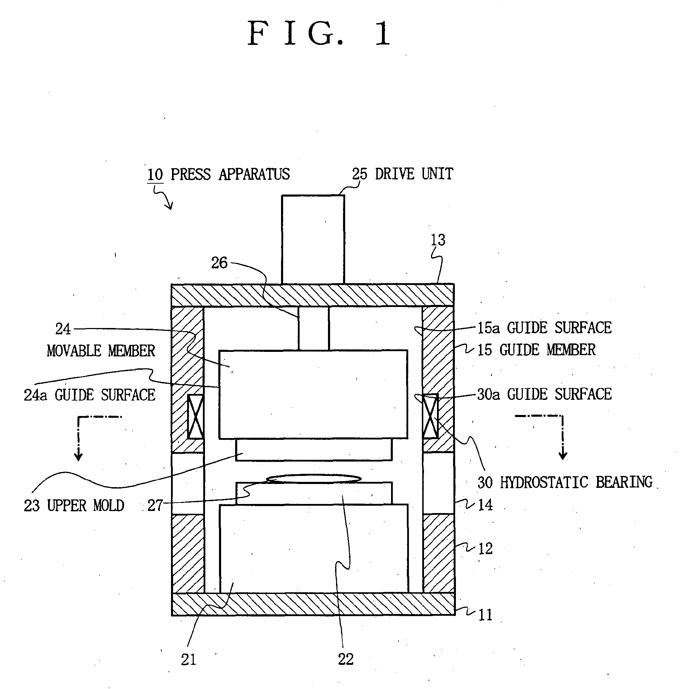

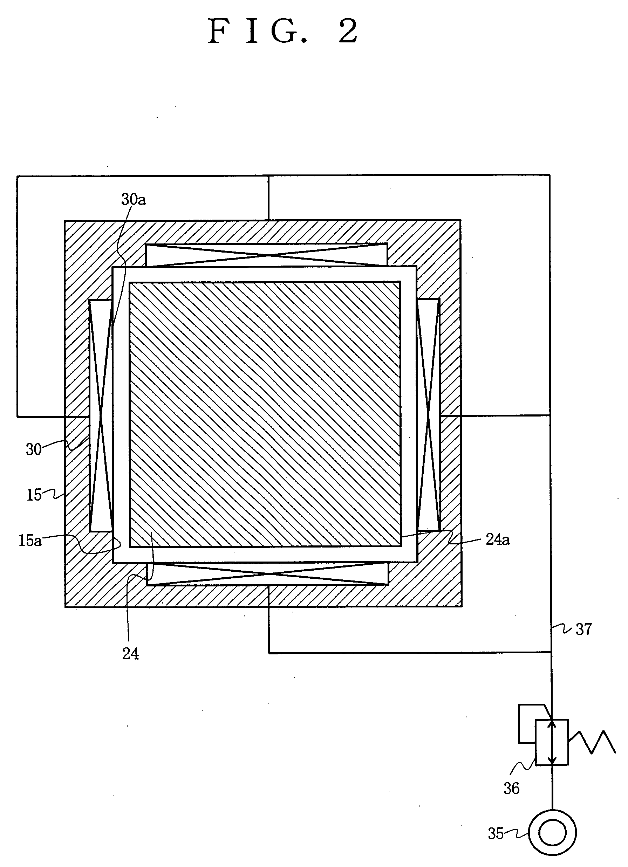

FIG. 1 is a vertical sectional view showing the configuration of a press apparatus according to a first embodiment of the present invention. FIG. 2 is a sectional view taken along line I-I of FIG. 1.

In FIG. 1, reference numeral 10 denotes a press apparatus; reference numeral 11 denotes a base frame, which serves as a portion of the frame of the press apparatus 10; and reference numeral 12 denotes a guide frame, which serves as a portion of the frame of the press apparatus 10. The guide frame 12 assumes the form of a rectangular prismatic tube in a standing condition, and a lower end portion thereof is attached to the upper surface of the base frame 11.

A ceiling frame 13, which serves as a portion of the frame of the press apparatus 10, is attached to an upper end portion of the guide frame 12. The base frame 11 and the ceiling frame 13 assume the form of a rectangular plate so as to close opposite end openings of the guide frame 12 in the form of a rectangular prismatic tube.

A stationary member 21 is mounted on the upper surface of the base frame 11 and within the guide frame 12. A lower mold 22, which serves as a stationary mold, is mounted on the upper surface of the stationary member 21, the upper surface serving as a mold-mounting surface. The lower mold 22 is mounted directly on the upper surface of the stationary member 21; however, the lower mold 22 may be mounted via an unillustrated mounting member. The upper surface of the lower mold 22 includes a flat mating surface, and the surface of a cavity formed in such a manner as to form a substantially lower half of a molded article. Reference numeral 27 denotes material for a molded article. As mentioned previously, for convenience, description of the present embodiment refers to the case of molding an article from glass. Therefore, the material 27 is glass material. Examples of molded articles include optical elements such as lenses, prisms, filters, and mirrors; storage media for use with computers such as disks; and optical-fiber-coupling members.

A drive unit 25 is mounted on the upper surface of the ceiling frame 13. A connecting rod 26 of the drive unit 25 extends downward through an unillustrated through-hole formed in the ceiling frame 13. A movable member 24 is attached to a lower end portion of the connecting rod 26. In the present embodiment, as shown in FIG. 2, the movable member 24 assumes the form of a prism having a rectangular cross section, preferably a square cross section. The vertically extending four side wall surfaces of the movable member 24 function as guide surfaces 24a. Notably, the movable member 24 may assume the form of a prismatic tube instead of a prism. An upper mold 23, which serves as a movable mold, is mounted on the lower surface of the movable member 24, the lower surface serving as a mold-mounting surface. The upper mold 23 is mounted directly on the lower surface of the movable member 24; however, the upper mold 23 may be mounted via an unillustrated mounting member. The lower surface of the upper mold 23 includes a flat mating surface, and the surface of a cavity formed in such a manner as to form a substantially upper half of a molded article.

The drive unit 25 is, for example, a cylinder unit including a piston to be driven by compressed fluid of high pressure. In this case, a lower end portion of the piston rod attached to the piston is connected to an upper end portion of the connecting rod 26. Through changeover of flow of compressed fluid supplied to the cylinder unit, the piston is moved upward or downward. Accordingly, the connecting rod 26 and the movable member 24 are moved upward or downward. Fluid for use as the compressed fluid is, for example, air, but may be other gas such as nitrogen gas. Also, liquid such as oil may be used.

The drive unit 25 may be an electric motor instead of the cylinder unit. For example, a linear motor may serve as the drive unit 25. In this case, a lower end of a reciprocating member (a slider), which corresponding to a rotor of a rotary motor, is connected to an upper end portion of the connecting rod 26. Through changeover of current supplied to the linear motor, the slider is moved upward or downward with respect to a stationary member, which corresponds to a stator of a rotary motor. Accordingly, the connecting rod 26 and the movable member 24 are moved upward or downward. Alternatively, the drive unit 25 may be a rotary electric motor such as a servomotor. In this case, rotation of a rotary shaft is converted to reciprocating motion by means of motion direction conversion device such as a combination mechanism of a ball screw and a nut. The reciprocating motion is transmitted to the connecting rod 26.

In the mold open state as shown in FIG. 1, the upper mold 23 is positioned above the lower mold 22. As the movable member 24 is moved downward, the upper mold 23 moves downward and approaches the lower mold 22. Subsequently, the mating surface of the upper mold 23 comes into contact with that of the lower mold 22; i.e., mold closing is performed. Furthermore, the upper mold 23 is pressed against the lower mold 22; i.e., mold clamping is performed. When mold closing and mold clamping are performed, the upper mold 23 and the lower mold 22 are integrally combined. As a result, the material 27 is vertically pressed while being confined in an unillustrated cavity defined by the upper mold 23 and the lower mold 22, thereby yielding a molded article assuming the shape of the cavity. When the material 27 is glass material, the material 27 is generally heated to a high temperature of about 300-500 °C and is in a softened condition.

The upper mold 23 and the lower mold 22 are made of, for example, a tungsten alloy, a stainless steel alloy, or cemented carbide. However, no particular limitation is imposed on material for the upper and lower molds 23 and 22. When the material 27 is glass material, preferably, a single-layer or multilayer thin film is formed on the surface of at least the cavity in order to prevent adhesion of glass material to the surface. The thin film is formed from, for example, hydrogenated amorphous carbon, diamond, titanium nitride, tantalum nitride, platinum-iridium, or platinum-silicon. However, no particular limitation is imposed on material for the thin film.

Work holes 14 are formed in side walls of the guide frame 12 for loading the material 27 on the lower mold 22 and unloading a molded article. In the present embodiment, a single work hole 14 is formed in each of the four side walls of the guide frame 12. However, no particular limitation is imposed on the form of the work hole 14. The work hole 14 may be designed as appropriate in terms of position, shape, size, quantity, among other characteristics.

Upper portions of the vertically extending side walls of the guide frame 12 function as a guide member 15 for guiding the movable member 24. The guide member 15 assumes the form of a prismatic tube having a rectangular cross section, preferably a square cross section. The inner surfaces of the side walls of the prismatic tube serve as guide surfaces 15a. As shown in FIG. 2, the cross-sectional shape of the movable member 24 and that of the guide member 15 are analogous to each other and are substantially square. The movable member 24 has four guide surfaces 24a, and adjacent guide surfaces 24a are perpendicular to each other. The guide member 15 has four guide surfaces 15a, and adjacent guide surfaces 15a are perpendicular to each other. The guide surfaces 24a of the movable member 24 face the corresponding guide surfaces 15a of the guide member 15 in parallel with each other.

The four guide surfaces 24a of the movable member 24 and the four guide surfaces 15a of the guide member 15 are smooth planes. The outside perimeter of the movable member 24 is slightly smaller than the inside perimeter of the guide member 15. A gap between the guide surfaces 24a of the movable member 24 and the corresponding guide surfaces 15a of the guide member 15 is very narrow. However, for convenience of description, FIG. 2 depicts the gap exaggeratingly large.

Hydrostatic bearings 30 are mounted on the corresponding guide surfaces 15a of the guide member 15. In the present embodiment, the hydrostatic bearings 30 each assume the form of a rectangular plate and are mounted on the corresponding guide surface 15a of the guide member 15 in an embedded condition. Guide surfaces 30a of the hydrostatic bearings 30 are substantially flush with the corresponding guide surfaces 15a of the guide member 15.

The mounting position of the hydrostatic bearings 30 is determined such that the guide surfaces 24a face, at least partially, the corresponding guide surfaces 30a of the hydrostatic bearings 30 at all times during vertical movement of the movable member 24. In other words, even when the movable member 24 is at any position of the stroke of its vertical movement, the guide surfaces 24a face, at least partially, the corresponding guide surfaces 30a of the hydrostatic bearings 30. Thus, the four guide surfaces 24a of the movable member 24 are hydrostatically held by means of the hydrostatic bearings 30 which face the same; therefore, the locus of vertical movement of the movable member 24 does not deviate horizontally. Also, the movable member 24 does not rotate about its vertically extending axis. Furthermore, since the guide surfaces 24a of the movable member 24 and the corresponding guide surfaces 30a of the hydrostatic bearings 30 are held in parallel with each other at all times, the movable member 24 is not inclined.

Since the guide surfaces 24a of the movable member 24 are hydrostatically held by means of the hydrostatic bearings 30 which face the same, the guide surfaces 24a do not come into contact with the guide surfaces 15a of the guide member 15 and the guide surfaces 30a of the hydrostatic bearings 30. That is, the guide surfaces 24a of the movable member 24 are hydrostatically held in a noncontacting condition. Thus, since no frictional resistance arises, the movable member 24 can be smoothly moved in the vertical direction through application of slight force. Therefore, load to be imposed on the drive unit 25 and the connecting rod 26 can be reduced.

Each of the hydrostatic bearings 30 may consist of a single hydrostatic bearing unit or a plurality of hydrostatic bearing units. For example, a plurality of hydrostatic bearing units in a square shape may be combined so as to make the hydrostatic bearing 30 in the form of a rectangular plate. Alternatively, the hydrostatic bearing 30 may partially include the hydrostatic bearing units; for example, the hydrostatic bearing units are disposed at merely corresponding opposite end portions of the hydrostatic bearing 30.

As shown in FIG. 2, compressed fluid is supplied to the hydrostatic bearings 30 from a compressed-fluid supply source 35 via a supply line 37, which serves as piping for supplying compressed fluid. The pressure of the compressed fluid to be supplied to the hydrostatic bearings 30 is adjusted by means of a pressure control valve 36 disposed in the supply line 37. Fluid for use as the compressed fluid is, for example, air, preferably cleaned dry air. Since cleaned dry air used as the compressed fluid contains neither dust nor water vapor, the surface of a molded article is not contaminated. Fluid for use as the compressed fluid may be another gas, preferably inert gas such as nitrogen gas, argon gas, helium gas, or krypton gas.

The compressed-fluid supply source 35 is, for example, a gas cylinder, a pressure tank, a compressor, or a combination thereof. However, no particular limitation is imposed on the compressed-fluid supply source 35. A plurality of compressed-fluid outlets are formed in the guide surface 30a of each of the hydrostatic bearings 30. The compressed fluid is discharged through the outlets and forms a hydrostatic film between the guide surface 30a and the corresponding guide surface 24a of the movable member 24, whereby the hydrostatic bearing 30 functions as a bearing.

Next, the configuration of a hydrostatic bearing unit of the hydrostatic bearing 30 will be described.

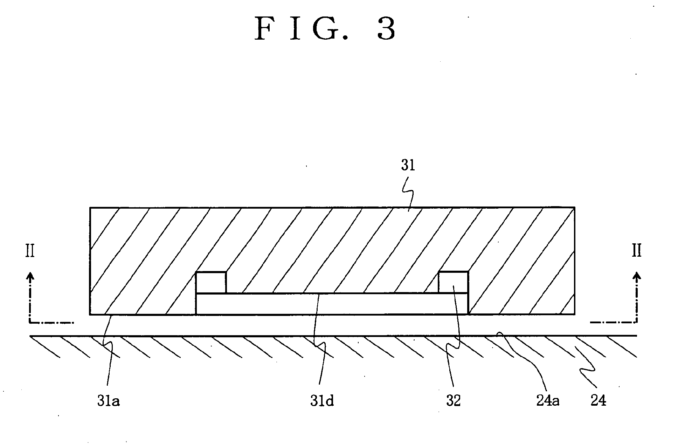

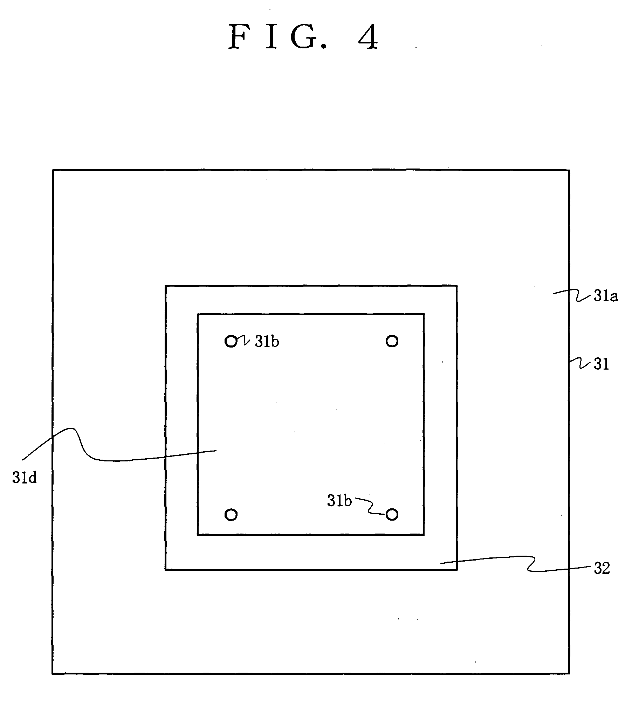

FIG. 3 is a sectional view showing the structure of the guide surface of a hydrostatic bearing unit in the first embodiment of the present invention. FIG. 4 is a plan view or view taken along line II-II of FIG. 3 showing the guide surface of the hydrostatic bearing unit in the first embodiment of the present invention.

In FIGS. 3 and 4, reference numeral 31 denotes a hydrostatic bearing unit. For convenience of description, the hydrostatic bearing unit 31 in the present embodiment assumes the form of a square plate. However, no particular limitation is imposed on the shape of the hydrostatic bearing unit 31. For example, the hydrostatic bearing unit 31 may assume the form of a rectangular or circular plate.

A guide surface 31a of the hydrostatic bearing unit 31 has a recess 31d formed thereon. The recess 31d has a flat bottom surface in parallel with the guide surface 31a. As shown in FIG. 4, a plurality of compressed-fluid outlets 31b; for example, four outlets 31b, are formed in the bottom surface of the recess 31d. The recess 31d assumes a square shape. The bottom surface of the recess 31d is depressed, for example, about 2 or 3 µm from the guide surface 31a. A groove 32 is formed around the recess 31d.

Compressed fluid supplied from the compressed-fluid supply source 35 is discharged downward in FIG. 3 from the outlets 31b, whereby a hydrostatic film is formed between the guide surface 31a of the hydrostatic bearing unit 31 and the guide surface 24a of the movable member 24, and thus a gap of, for example, about 2 or 3 µm is formed between the guide surface 31a and the guide surface 24a. Thus, even when a force is exerted on the hydrostatic bearing unit 31 or the movable member 24 in such a manner as to press the hydrostatic bearing unit 31 or the movable member 24 toward the other, a gap is maintained between the guide surface 31a and the guide surface 24a; i.e., the effect of hydrostatic holding can be obtained. Therefore, the movable member 24 can freely move with respect to the hydrostatic bearing unit 31 in the lateral direction in FIG. 3 or perpendicularly to the paper on which FIG. 3 appears.

The above-mentioned gap can be modified through adjustment of, for example, pressure of compressed fluid. When the gap is, for example, about 0.1-100 µm, the effect of hydrostatic holding can be obtained. The structure of the guide surface 31a of the hydrostatic bearing unit 31 can be modified as appropriate. For example, the groove 32 can be eliminated. Furthermore, the recess 31d can be eliminated such that the outlets 31b are directly formed in the guide surface 31a which assumes the form of a single plane. Notably, when the recess 31d is formed, pressure loss of compressed fluid decreases in the recess 31d, so that hydrostatic holding force can be increased.

Next, the operation of the thus-configured press apparatus 10 will be described.

First, the drive unit 25 is activated beforehand so as to establish a mold open condition in which the upper mold 23 is located above the lower mold 22 with a certain distance established therebetween. By means of a transfer device, such as a manipulator, disposed at the exterior of the press apparatus 10, or by the hands of a worker, the material 27 is transferred into the guide frame 12 through the work hole 14 and is placed on the lower mold 22 mounted on the upper surface of the stationary member 21. In the present embodiment, the material 27 is the perform made of silica glass and is preheated to high temperature (e.g., 300-500 °C) to thereby be softened. Thus, the material 27 in a softened condition is placed in the cavity of the lower mold 22. Subsequently, the material 27 is further heated to a predetermined temperature (e.g., 600 °C) by means of an unillustrated heating unit.

Subsequently, the drive unit 25 is activated so as to move the connecting rod 26 downward. The four guide surfaces 24a of the movable member 24 move downward along the four corresponding guide surfaces 15a of the guide member 15. In this case, the guide surfaces 24a of the movable member 24 face, at least partially, the corresponding guide surfaces 30a of the hydrostatic bearings 30 at all times. In other words, even when the movable member 24 is at any position of the stroke of its downward movement, the guide surfaces 24a face, at least partially, the corresponding guide surfaces 30a of the hydrostatic bearings 30.

Since, while the movable member 24 is moving downward, compressed fluid is discharged from the outlets of the hydrostatic bearings 30 mounted on the guide member 15, the four guide surfaces 24a of the movable member 24 are hydrostatically held at all times, with equal forces, by the four corresponding hydrostatic bearings 30. The adjacent guide surfaces 24a are perpendicular to each other, and the guide surfaces 30a of the hydrostatic bearings 30 are in parallel with the corresponding guide surfaces 24a. Thus, the movable member 24 is subjected to equal forces which are exerted thereon from directions perpendicular to the four corresponding guides surfaces 24a (from horizontally opposite directions and from vertically opposite directions in FIG. 2). Therefore, the locus of downward movement of the movable member 24 does not deviate horizontally. Also, the movable member 24 does not rotate about its vertically extending axis. Furthermore, since the guide surfaces 24a of the movable member 24 and the corresponding guide surfaces 30a of the hydrostatic bearings 30 are held in parallel with each other at all times, the movable member 24 is not inclined. That is, the vertically extending axis of the movable member 24 is not inclined with respect to the vertically extending axis of the guide frame 12.

Since the guide surfaces 24a of the movable member 24 are hydrostatically held by means of the hydrostatic bearings 30 which face the same, the guide surfaces 24a do not come into contact with the guide surfaces 15a of the guide member 15 and the guide surfaces 30a of the hydrostatic bearings 30. Thus, since no frictional resistance arises, the movable member 24 can be smoothly moved downward through application of slight force. Therefore, load to be imposed on the drive unit 25 and the connecting rod 26 can be reduced.

As the movable member 24 is moved downward, the upper mold 23 mounted on the lower surface of the movable member 24 moves downward and approaches the lower mold 22. Then, the mating surface of the upper mold 23 comes into contact with that of the lower mold 22; i.e., mold closing is performed. At this time, the locus of downward movement of the movable member 24 does not deviate horizontally, and the movable member 24 does not rotate and is not inclined. Therefore, the locus of downward movement of the upper mold 23 does not deviate horizontally, and the upper mold 23 does not rotate and is not inclined. Thus, at the time of mold closing, the positional relationship is accurately maintained between the mating surface of the upper mold 23 and that of the lower mold 22, thereby permitting smooth engagement of the upper mold 23 and the lower mold 22. Also, the upper mold 23 or the lower mold 22 is free from breakage.

Subsequently, the upper mold 23 is pressed against the lower mold 22; i.e., mold clamping is performed. Thus, the upper mold 23 and the lower mold 22 are integrally combined. As a result, a glass material which serves as the material 27 is vertically pressed while being confined in a cavity defined by the upper mold 23 and the lower mold 22, thereby yielding a molded glass article assuming the shape of the cavity. After press molding ends, cooling is performed until the temperature of the molded glass article drops to the transition point of glass or below. During this cooling, the molded glass article confined in the cavity is continuously subjected to a pressing force which is exerted from vertically opposite directions and is smaller than a molding force. When the temperature of the molded glass article drops to the transition point of glass or below, the drive unit 25 stops operating, whereby pressing the molded glass article ends.

In this case, since no frictional resistance arises between the guide surfaces 24a of the movable member 24 and the corresponding guide surfaces 15a of the guide member 15 and between the guide surfaces 24a of the movable member 24 and the corresponding guide surfaces 30a of the hydrostatic bearings 30, output of the drive unit 25 is transmitted to the upper mold 23 without being influenced by frictional resistance. Thus, through control of output of the drive unit 25, a pressing force to be applied to the material 27 from the upper mold 23 can be appropriately controlled. Therefore, a molded glass article of high quality assuming a predetermined shape can be obtained.

After mold clamping is performed at a predetermined pressing force for a predetermined time, the drive unit 25 is activated so as to move the connecting rod 26 and the movable member 24 upward. As a result, the upper mold 23 moves away from the lower mold 22; i.e., mold opening is performed. Also in this case, as in the case where the movable member 24 is moved downward, the locus of upward movement of the movable member 24 does not deviate horizontally, and the movable member 24 does not rotate and is not inclined. Therefore, the locus of upward movement of the upper mold 23 does not deviate horizontally, and the upper mold 23 does not rotate and is not inclined. Thus, at the time of mold opening, the positional relationship is accurately maintained between the mating surface of the upper mold 23 and that of the lower mold 22, thereby permitting smooth separation of the upper mold 23 and the lower mold 22. Also, the upper mold 23 or the lower mold 22 is free from breakage.

The movable member 24 is moved upward until the same reaches the top dead center. Also in this case, the locus of upward movement of the movable member 24 does not deviate horizontally, and the movable member 24 does not rotate and is not inclined. Therefore, the locus of upward movement of the upper mold 23 does not deviate horizontally, and the upper mold 23 does not rotate and is not inclined. Thus, vibration is not generated. Also, since no frictional resistance arises, the movable member 24 can be smoothly moved upward through application of slight force. Therefore, load to be imposed on the drive unit 25 and the connecting rod 26 can be reduced.

After mold opening is performed, by means of a transfer device or by the hands of a worker, a molded article is unloaded to the exterior of the guide frame 12 through the work hole 14, and then the material 27 to be used to mold the next glass article is transferred into the guide frame 12 through the work hole 14 and is placed on the lower mold 22.

The above-described operation is repeated, thereby yielding a number of molded glass articles.

The present embodiment has been described while mentioning the case of molding an article from glass. In the case of molding an article from glass or resin, the material 27 may be heated or placed in a predetermined atmosphere, for example, in an inert gas atmosphere, immediately before molding. Also, immediately after molding, a molded article may be cooled. In such a case, a heating unit, a cooling unit, an inert gas supply unit, or the like may be disposed in the periphery of the press apparatus 10. Such arrangement enables direct heating or cooling of the material 27 or a molded article in an inert gas atmosphere, or heating or cooling of the material 27 placed on the lower mold 22, or heating or cooling of the material 27 or a molded article confined in a cavity defined by the upper mold 23 and the lower mold 22.

As described above, in the present embodiment, the four guide surfaces 24a of the movable member 24 are hydrostatically held, with equal forces, by the four corresponding hydrostatic bearings 30. The adjacent guide surfaces 24a are perpendicular to each other, and the guide surfaces 30a of the hydrostatic bearings 30 are in parallel with the corresponding guide surfaces 24a. Thus, the movable member 24 is subjected to equal forces which are exerted thereon form directions perpendicular to the four corresponding guide surfaces 24a. Therefore, the locus of movement of the movable member 24 does not deviate horizontally. Also, the movable member 24 does not rotate about its vertically extending axis. Furthermore, since the guide surfaces 24a of the movable member 24 and the corresponding guide surfaces 30a of the hydrostatic bearings 30 are held in parallel with each other at all times, the movable member 24 is not inclined.

Thus, at the time of mold closing, the positional relationship is accurately maintained between the mating surface of the upper mold 23 and that of the lower mold 22, thereby permitting smooth engagement of the upper mold 23 and the lower mold 22. Also, the upper mold 23 or the lower mold 22 is free from breakage.

Since the guide surfaces 24a of the movable member 24 are hydrostatically held by means of the hydrostatic bearings 30 which face the same, the guide surfaces 24a do not come into contact with the guide surfaces 15a of the guide member 15 and the guide surfaces 30a of the hydrostatic bearings 30. Thus, since no frictional resistance arises, the movable member 24 can be smoothly moved downward through application of slight force. Therefore, load to be imposed on the drive unit 25 and the connecting rod 26 can be reduced. Also, output of the drive unit 25 is transmitted to the upper mold 23 without being influenced by frictional resistance. Thus, through control of output of the drive unit 25, a pressing force to be applied to the material 27 from the upper mold 23 can be appropriately controlled. Therefore, a molded article of high quality assuming a predetermined shape can be obtained.

Next, a second embodiment of the present invention will be described. Structural features similar to those of the first embodiment are denoted by common reference numerals, and repeated description thereof is omitted. Also, repeated description of actions and effects similar to those of the first embodiment is omitted.

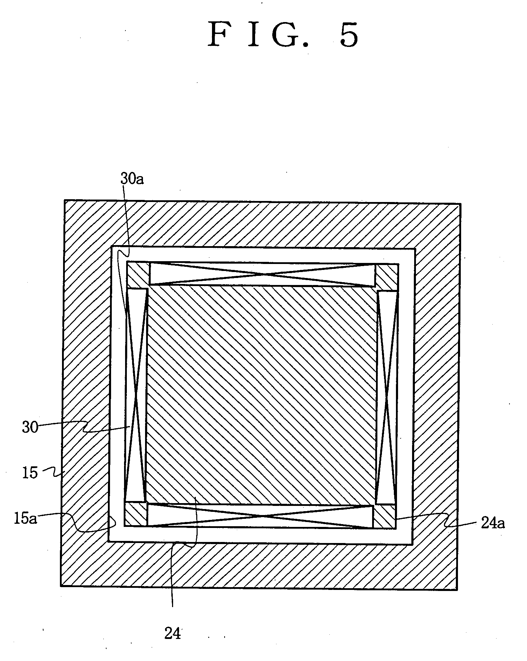

FIG. 5 is a transverse sectional view showing the configuration of a press apparatus according to a second embodiment of the present invention.

In the first embodiment, the hydrostatic bearings 30 are mounted on the corresponding guide surfaces 15a of the guide member 15. The mounting position of the hydrostatic bearings 30 is determined such that the guide surfaces 24a face, at least partially, the corresponding guide surfaces 30a of the hydrostatic bearings 30 at all times during vertical movement of the movable member 24. However, in the case where the stroke of vertical movement of the movable member 24 is very long as compared with the vertical dimension of the guide surfaces 24a, it is difficult for the guide surfaces 24a to face, at least partially, the corresponding guide surfaces 30a of the hydrostatic bearings 30 at all times.

Thus, in the present embodiment, the hydrostatic bearings 30 are mounted on the four corresponding guide surfaces 24a of the movable member 24 in an embedded condition. The guide surfaces 30a of the hydrostatic bearings 30 are substantially flush with the corresponding guide surfaces 24a of the movable member 24. Notably, no hydrostatic bearings 30 are mounted on the four guide surfaces 15a of the guide member 15.

The vertical dimension of the guide surfaces 15a of the guide member 15 is determined in such a manner as to be longer than that of the guide surfaces 24a of the movable member 24 and to cover the overall stroke of vertical movement of the movable member 24. Thus, when the movable member 24 is moving vertically, the guide surfaces 15a of the guide member 15 face, at least partially, the corresponding guide surfaces 30a of the hydrostatic bearings 30 at all times. In other words, even when the stroke of vertical movement of the movable member 24 is very long as compared with the vertical dimension of the guide surfaces 24a, the guide surfaces 15a of the guide member 15 face, at least partially, the corresponding guide surfaces 30a of the hydrostatic bearings 30 at all times.

Thus, since the hydrostatic bearings 30 mounted on the corresponding guide surfaces 24a of the movable member 24 are hydrostatically held by means of the four corresponding guide surfaces 15a of the guide member 15, the locus of vertical movement of the movable member 24 does not deviate horizontally. Also, the movable member 24 does not rotate about its vertically extending axis. Furthermore, since the guide surfaces 15a of the guide member 15 and the corresponding guide surfaces 30a of the hydrostatic bearings 30 are held in parallel with each other at all times, the movable member 24 is not inclined.

Since the hydrostatic bearings 30 mounted on the corresponding guide surfaces 24a of the movable member 24 are hydrostatically held by means of the four guide surfaces 15a of the guide member 15 which face the same, the four guide surfaces 24a of the movable member 24 do not come into contact with the guide surfaces 15a of the guide member 15. Thus, no frictional resistance arises.

Next, a third embodiment of the present invention will be described. Structural features similar to those of the first and second embodiments are denoted by common reference numerals, and repeated description thereof is omitted. Also, repeated description of actions and effects similar to those of the first and second embodiments is omitted.

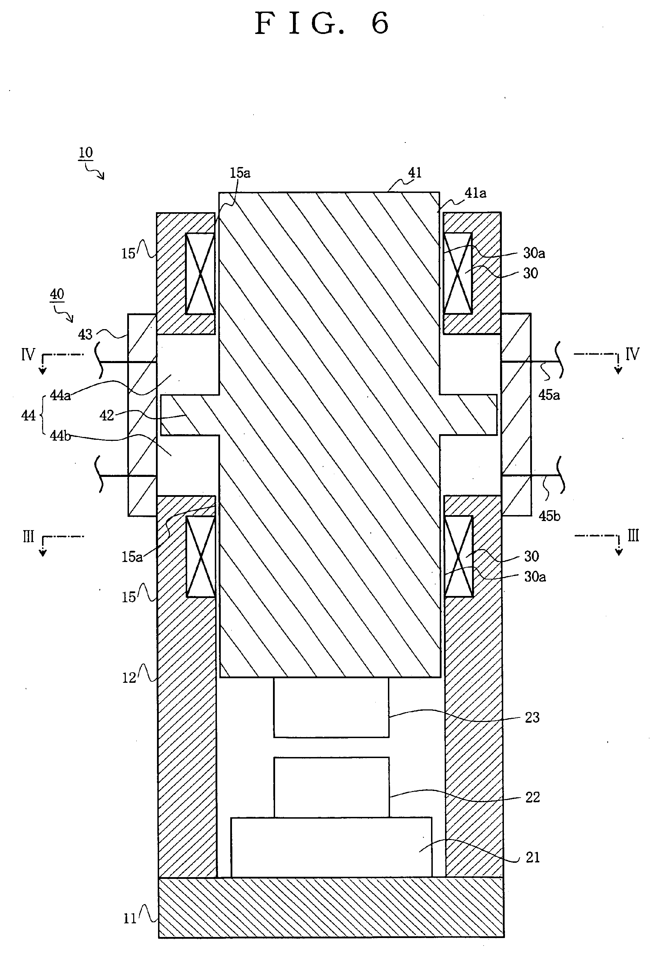

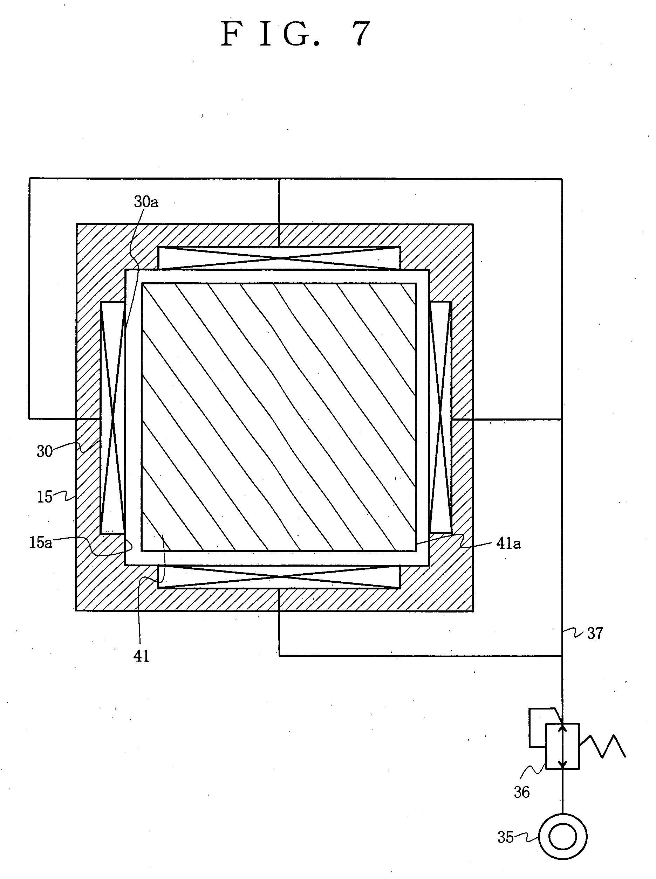

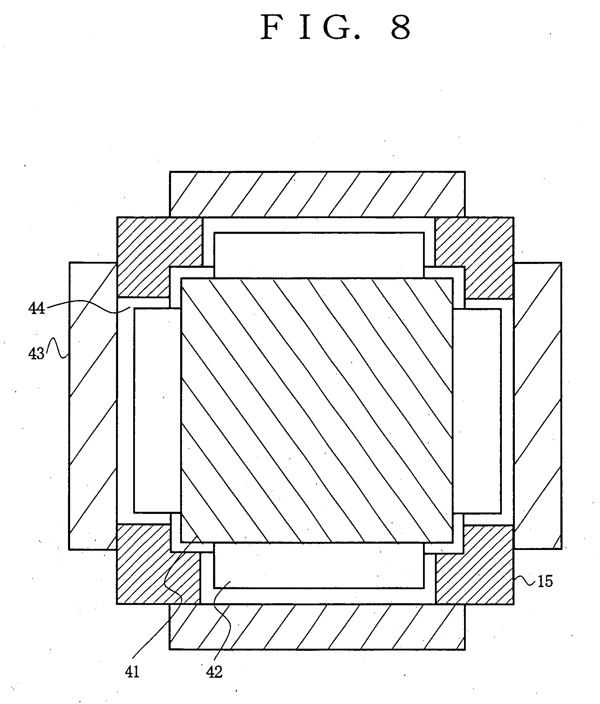

FIG. 6 is a vertical sectional view showing the configuration of a press apparatus according to a third embodiment of the present invention; FIG. 7 is a sectional view taken along line III-III of FIG. 6; and FIG. 8 is a sectional view taken along line IV-IV of FIG. 6.

A drive unit 40 of the press apparatus 10 of the present embodiment is constituted by portions of side walls of a movable member 41 and portions of side walls of the guide frame 12. The upper mold 23, which serves as a movable mold, is mounted on the movable member 41. As shown in FIG. 7, the movable member 41 assumes the form of a prism having a rectangular cross section, preferably a square cross section. The vertically extending four side wall surfaces of the movable member 41 function as guide surfaces 41a. The movable member 41 is made of, for example, ceramic or a stainless steel alloy. However, no particular limitation is imposed on material for the movable member 41. The upper mold 23 is mounted directly on the lower surface of the movable member 41; however, the upper mold 23 may be mounted via an unillustrated mounting member.

Upper portions of the vertically extending side walls of the guide frame 12 function as a guide member 15 for guiding the movable member 41. The guide member 15 assumes the form of a prismatic tube having a rectangular cross section, preferably a square cross section. The inner surfaces of the side walls of the prismatic tube serve as guide surfaces 15a. As shown in FIG. 7, the cross-sectional shape of the movable member 41 and that of the guide member 15 are analogous to each other and are substantially square. The guide surfaces 41a of the movable member 41 face the corresponding guide surfaces 15a of the guide member 15 in parallel with each other. The four guide surfaces 41a of the movable member 41 and the four guide surfaces 15a of the guide member 15 are smooth planes. The outside perimeter of the movable member 41 is slightly smaller than the inside perimeter of the guide member 15. A gap between the guide surfaces 41a of the movable member 41 and the corresponding guide surfaces 15a of the guide member 15 is very narrow. However, for convenience of description, FIGS. 6 and 7 depict the gap exaggeratingly large.

Hydrostatic bearings 30 are mounted on the corresponding guide surfaces 15a of upper and lower portions of the guide member 15. Since the guide surfaces 41a of upper and lower portions of the movable member 41 are hydrostatically held by means of the hydrostatic bearings 30 which face the same, the guide surfaces 41a do not come into contact with the guide surfaces 15a of the guide member 15 and the guide surfaces 30a of the hydrostatic bearings 30. That is, the guide surfaces 41a of the movable member 41 are hydrostatically held in a noncontacting condition. Thus, since no frictional resistance arises, the movable member 41 can be smoothly moved in the vertical direction through application of slight force.

The mounting position of the hydrostatic bearings 30 is determined such that the guide surfaces 41a of upper and lower portions of the movable member 41 face, at least partially, the corresponding guide surfaces 30a of the hydrostatic bearings 30 at all times during vertical movement of the movable member 41. In other words, even when the movable member 41 is at any position of the stroke of its vertical movement, the guide surfaces 41a of upper and lower portions of the movable member 41 face, at least partially, the corresponding guide surfaces 30a of the hydrostatic bearings 30. Thus, the four guide surfaces 41a of upper and lower portions of the movable member 41 are hydrostatically held by means of the hydrostatic bearings 30 which face the same; therefore, the locus of vertical movement of the movable member 41 does not deviate horizontally. Also, the movable member 41 does not rotate about its vertically extending axis. Furthermore, since the guide surfaces 41a of upper and lower portions of the movable member 41―the upper and lower portions being located axially away from each other―are hydrostatically held in corresponding directions perpendicular to the axial direction, inclination of the axis can be more effectively prevented.

In the present embodiment, the drive unit 40 is disposed between the upper hydrostatic bearings 30 and the lower hydrostatic bearings 30. Specifically, portions of the guide member 15 located between the upper hydrostatic bearings 30 and the lower hydrostatic bearings 30 are removed so as to form pressure chambers 44. In the present embodiment, as shown in FIGS. 6 and 8, through-holes are formed in the corresponding side walls of the guide frame 12, which serves as the guide member 15. The through-holes are closed with corresponding plate-like cover members 43, thereby forming the corresponding pressure chambers 44. The through-holes are closed from the inside with the corresponding guide surfaces 41a of the movable member 41. Notably, in the case where the side walls of the guide frame 12 are made of thick plates, respectively, recesses instead of the through-holes may be formed on the corresponding inner surfaces of the side walls so as to form the pressure chambers 44. In this case, the cover members 43 are not required, and the recesses are closed from the inside with the corresponding guide surfaces 41a of the movable member 41.

Plate-like partition walls 42 which project outward are formed on the corresponding guide surfaces 41a of the movable member 41. The partition walls 42 may be attached to the movable member 41; however, the present embodiment is described while mentioning the partition walls 42 formed integrally with the movable member 41. The four pressure chambers 44 each assume the form of a prismatic tube having a rectangular cross section. As shown in FIG. 8, the outline of each of the four partition walls 42 and the cross-sectional shape of each of the four pressure chambers 44 are analogous to each other and are rectangular. The inner surface of each of the pressure chambers 44 and the perimetric surface of each of the partition walls 42 are smooth planes. The outside perimeter of each of the partition walls 42 is slightly smaller than the inside perimeter of each of the pressure chambers 44. A gap between the perimetric surfaces of the partition walls 42 and the corresponding inner surfaces of the pressure chambers 44 is very narrow. However, for convenience of description, FIGS. 6 and 8 depict the gap exaggeratingly large.

Compressed-fluid lines 45a and 45b are attached to the cover members 43 such that the compressed-fluid line 45a communicates with an upper pressure chamber 44a located above the partition wall 42 in each of the pressure chambers 44 and such that the compressed-fluid line 45b communicates with a lower pressure chamber 44b located below the partition wall 42 in each of the pressure chambers 44. An unillustrated compressed-fluid supply source supplies compressed fluid to the upper pressure chambers 44a and the lower pressure chambers 44b via the compressed-fluid lines 45a and 45b, which serve as piping for supplying compressed fluid. Also, the thus-supplied compressed fluid is discharged from the upper and lower pressure chambers 44a and 44b.

Fluid for use as the compressed fluid to be supplied to the upper and lower pressure chambers 44a and 44b is, for example, air, preferably cleaned dry air. Since cleaned dry air used as the compressed fluid contains neither dust nor water vapor, the surface of a molded article is not contaminated. Fluid for use as the compressed fluid may be another gas, preferably inert gas such as nitrogen gas, argon gas, helium gas, or krypton gas. Preferably, the compressed fluid is identical to compressed fluid to be supplied to the hydrostatic bearings 30. In this case, the compressed-fluid supply source for the pressure chambers 44 can be the same as the compressed-fluid supply source 35 for the hydrostatic bearings 30.

The pressure chamber 44 corresponds to the pressure chamber of an ordinary cylinder unit; the partition wall 42 corresponds to the piston of the ordinary cylinder unit; and the movable member 41 corresponds to the piston rod of the ordinary cylinder unit. In this case, through supply of compressed fluid to the upper pressure chambers 44a or the lower pressure chambers 44b, the partition walls 42 and the movable member 41 can be moved upward or downward. Thus, the upper mold 23 mounted on the lower surface of the movable member 41 can be moved upward and downward.

As in the case of the first embodiment, a gap between the guide surfaces 31a of the hydrostatic bearing units 31 and the corresponding guide surfaces 41a of the movable member 41 is, for example, about 2 or 3 µm. The gap can be modified through adjustment of, for example, pressure of compressed fluid to be supplied to the hydrostatic bearing units 31. When the gap is, for example, about 0.1-100 µm, the effect of hydrostatic holding can be obtained. Also, a gap between the guide surfaces 15a of the guide member 15 and the corresponding guide surfaces 41a of the movable member 41 is similar to that between the guide surfaces 31a of the hydrostatic bearing units 31 and the corresponding guide surfaces 41a of the movable member 41; and a gap between the inner surfaces of the pressure chambers 44 and the corresponding perimetric surfaces of the partition walls 42 is similar to that between the guide surfaces 31a of the hydrostatic bearing units 31 and the corresponding guide surfaces 41a of the movable member 41. Therefore, compressed fluid supplied to the upper pressure chambers 44a and the lower pressure chambers 44b hardly leaks out. When compressed fluid to be supplied to the pressure chambers 44 is identical to that to be supplied to the hydrostatic bearings 30, leakage of compressed fluid, if any, from the pressure chambers 44 or the hydrostatic bearings 30 raises no mutual influence on the pressure chambers 44 and the hydrostatic bearings 30.

As mentioned above, in the present embodiment, the drive unit 40 includes the partition walls 42 of the movable member 41 and the pressure chambers 44 formed in the corresponding side walls of the guide member 15. Through supply of compressed fluid to the upper pressure chambers 44a or lower pressure chambers 44b of the pressure chambers 44, the partition walls 42 and the movable member 41 can be moved upward or downward. Thus, through use of the drive unit 40 of simple structure, the upper mold 23 mounted on the lower surface of the movable member 41 can be moved upward and downward. Also, the overall configuration of the press apparatus 10 can be simplified and reduced in size.

The hydrostatic bearings 30 are mounted on corresponding portions of the guide member 15 which are located above and below the pressure chambers 44; i.e., on the corresponding guide surfaces 15a of upper and lower portions of the guide member 15. The guide surfaces 41a of upper and lower portions of the movable member 41 are hydrostatically held by means of the hydrostatic bearings 30 which face the same. Thus, the guide surfaces 41a of the upper and lower portions of the movable member 41―the upper and lower portions being located axially away from each other―are hydrostatically held in corresponding directions perpendicular to the axial direction, whereby inclination of the axis can be more effectively prevented.

Next, a fourth embodiment of the present invention will be described. Structural features similar to those of the first to third embodiments are denoted by common reference numerals, and repeated description thereof is omitted. Also, repeated description of actions and effects similar to those of the first to third embodiments is omitted.

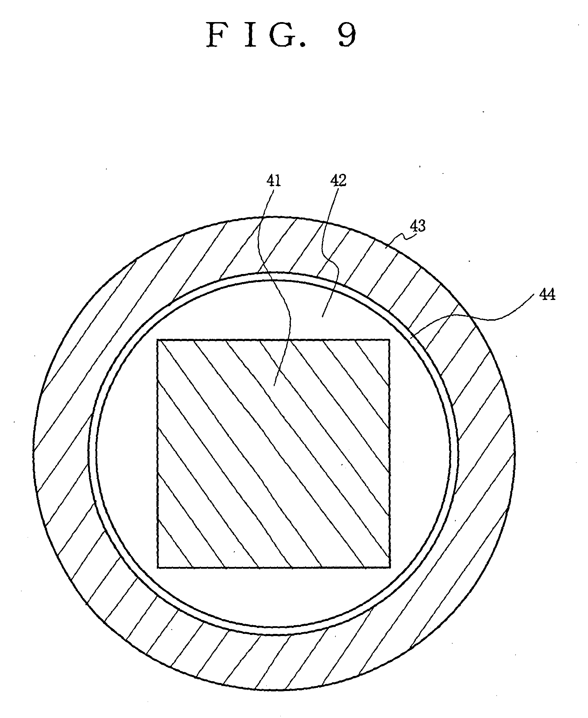

FIG. 9 is a sectional view taken along line IV-IV of FIG. 6, showing the fourth embodiment of the present invention.

In the present embodiment, as shown in FIG. 9, a single cover member 43 assuming a cylindrical shape is provided, and a single partition wall 42 assuming the form of a disk-like flange surrounding the movable member 41 is provided. The pressure chamber 44 assumes a form resembling a single cylinder. The outline of the partition wall 42 and the cross-sectional shape of the pressure chamber 44 are analogous to each other and are circular. The diameter of the circle is greater than the length of the diagonal of the movable member 41.

Thus, the drive unit 40 composed of the movable member 41, the partition wall 42, and the cover member 43 corresponds to a single cylinder unit. The movable member 41 corresponds to a piston rod disposed at the center of the cylinder unit. In this case, since the partition wall 42 and the pressure chamber 44 are provided singly, the structure is simplified; manufacturing is facilitated; and the number of compressed-fluid lines 45a and 45b can be reduced. Other features are similar to those of the third embodiment, and thus repeated description thereof is omitted.

Next, a fifth embodiment of the present invention will be described. Structural features similar to those of the first to fourth embodiments are denoted by common reference numerals, and repeated description thereof is omitted. Also, repeated description of actions and effects similar to those of the first to fourth embodiments is omitted.

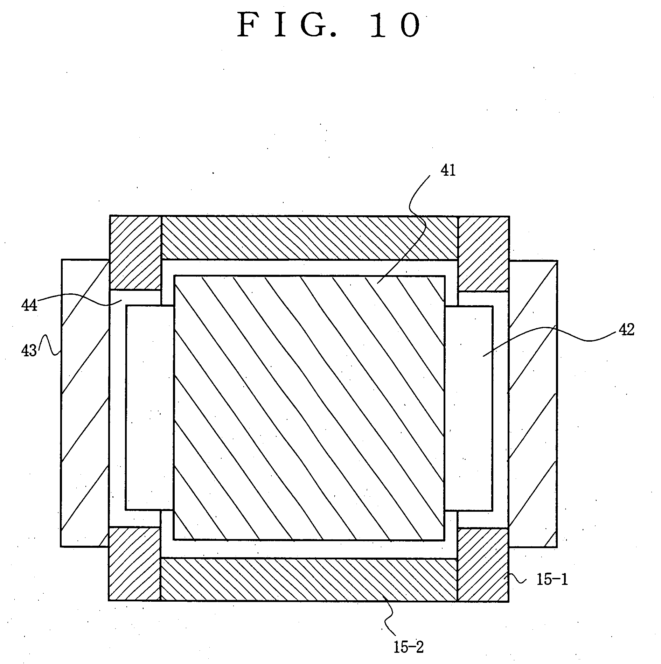

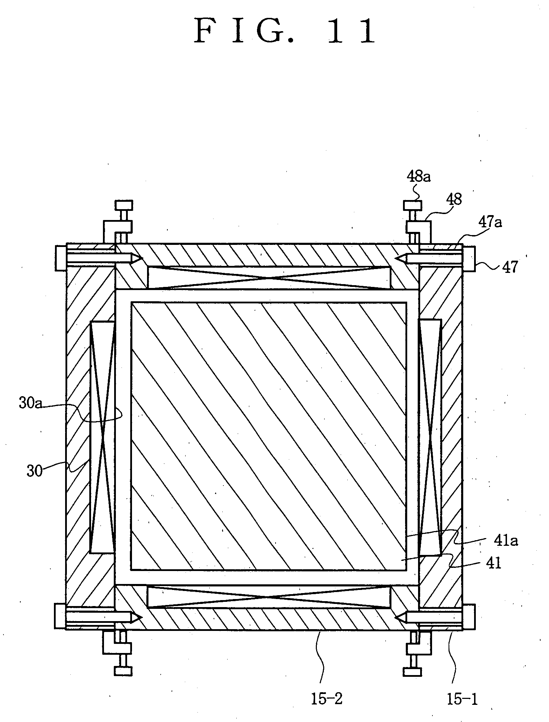

FIG. 10 is a sectional view taken along line IV-IV of FIG. 6, showing the fifth embodiment of the present invention. FIG. 11 is a sectional view taken along line III-III of FIG. 6, showing the fifth embodiment of the present invention.

In the present embodiment, as shown in FIG. 10, a pressure chamber 44 is only formed at each of a pair of opposed portions of the guide member 15. That is, two pressure chambers 44 are formed in opposition to each other. Similarly, a partition wall 42 is formed at each of a pair of opposed guide surfaces 41a of the movable member 41. In this case, since the number of partition walls 42 and pressure chambers 44 is fewer than that of the third embodiment, the structure is simplified; manufacturing is facilitated; and the number of compressed-fluid lines 45a and 45b can be reduced.

Preferably, as shown in FIG. 10, the guide member 15 includes wide guide members 15-1, in which the corresponding pressure chambers 44 are formed, and narrow guide members 15-2, in which no pressure chamber 44 is formed. In this case, the width of the narrow guide members 15-2 (a horizontal length in FIG. 10) is substantially equal to the distance between the paired, opposed guide surfaces 41a on which the corresponding partition walls 42 are formed. The width of the wide guide members 15-1 (a vertical length in FIG. 10) is substantially equal to the distance between the paired, opposed guide surfaces 41a on which no partition wall 42 is formed, plus the total thickness of the paired narrow guide members 15-2. The narrow guide members 15-2 are held at their opposite end surfaces between the mutually facing surfaces of the paired wide guide members 15-1; i.e., between the guide surfaces 15a. As shown in FIG. 11, the wide guide members 15-1 and the narrow guide members 15-2 are joined together by means of joining members 47 such as bolts. In this case, the joining members 47 cause the guide surfaces 15a of the wide guide members 15-1 to be pressed against the end surfaces of the narrow guide members 15-2.

In the present embodiment, when the drive unit 40 is activated in order to move the movable member 41 vertically, compressed fluid is introduced into the pressure chambers 44; as a result, pressure within the pressure chambers 44 increases. Thus, the wide guide members 15-1 are subjected to respective forces which are exerted thereon in such directions as to potentially move them away from each other. In this case, since, as shown in FIG. 11, the joining members 47 cause the guide surfaces 15a of the wide guide members 15-1 to be pressed against the end surfaces of the narrow guide members 15-2, the distance between the wide guide members 15-1 does not increase. Thus, the distance between the guide surfaces 30a of the hydrostatic bearings 30 mounted on the corresponding surfaces 15a of the paired wide guide members 15-1 remains unchanged. Therefore, even when the drive unit 40 is activated, a gap between the guide surfaces 30a of the hydrostatic bearings 30 and the corresponding guide surfaces 41a of the movable member 41 remains unchanged. Thus, performance of the hydrostatic bearings 30 is not affected.

Notably, if the pressure chambers 44 are formed in the corresponding narrow guide members 15-2, increase in pressure within the pressure chambers 44 causes the narrow guide members 15-2 to be subjected to respective forces which are exerted thereon in such directions as to potentially move them away from each other. In this case, as shown in FIG. 11, the joining members 47 are subjected to respective forces which are exerted thereon in shear directions; i.e., in directions perpendicular to their axes. As a result, the joining member 47 may be deformed, potentially increasing the distance between the narrow guide members 15-2. If the distance increases, the distance between the guide surfaces 30a of the hydrostatic bearings 30 mounted on the corresponding guide surfaces 15a of the paired narrow guide members 15-2 will change. Accordingly, a gap between the guide surfaces 30a of the hydrostatic bearings 30 and the corresponding guide surfaces 41a of the movable member 41 will change; as a result, performance of the hydrostatic bearings 30 will be affected.

Thus, the narrow guide members 15-2 are held at their opposite end surfaces between the guide surfaces 15a of the paired wide guide members 15-1, and the narrow guide members 15-2 and the wide guide members 15-1 are joined together by means of joining members 47 such that the guide surfaces 15a of the wide guide members 15-1 are pressed against the corresponding end surfaces of the narrow guide members 15-2, whereby performance of the hydrostatic bearings 30 can be stabilized. Other features are similar to those of the third embodiment, and thus repeated description thereof is omitted.

Notably, the structure shown in FIG. 11 is also applicable to the first to third embodiments. In the first to third embodiments, all of the four wall surfaces are provided with the respective hydrostatic bearings 30. That is, the wall surfaces of the wide guide members 15-1 and the wall surfaces of the narrow guide members 15-2 are provided with the respective pressure chambers 44.

In this case, preferably, joining-member insertion holes 47a formed in the wide guide members 15-1 have a relatively large size so as to allow movement of the corresponding joining members 47 in the width direction of the wide guide members 15-1 (in the vertical direction in FIG. 11); and distance-between-narrow-guide-members adjustment members 48 with which corresponding adjustment bolts 48a are screw-engaged are attached to the wide guide members 15-1. In adjustment, the joining members 47 are loosened, and the adjustment bolts 48a are rotated so as to adjust the distance between the guide surfaces 15a of the opposed narrow guide members 15-2, thereby appropriately adjusting a gap between the guide surfaces 41a of the movable member 41 and the corresponding guide surfaces 30a of the hydrostatic bearings 30 mounted on the corresponding guide surfaces 15a.

When the distance between the guide surfaces 15a of the opposed wide guide members 15-1 is to be adjusted, a shim(s) is interposed between the end surface of each of the narrow guide members 15-2 and the guide surface 15a of each of the wide guide members 15-1 while the thickness and the number of shims are adjusted. In this manner, a gap between the guide surfaces 41a of the movable member 41 and the corresponding guide surfaces 30a of the hydrostatic bearings 30 mounted on the corresponding guide surfaces 15a of the wide guide members 15-1 can be appropriately adjusted.

Next, a sixth embodiment of the present invention will be described. Structural features similar to those of the first to fifth embodiments are denoted by common reference numerals, and repeated description thereof is omitted. Also, repeated description of actions and effects similar to those of the first to fifth embodiments is omitted.

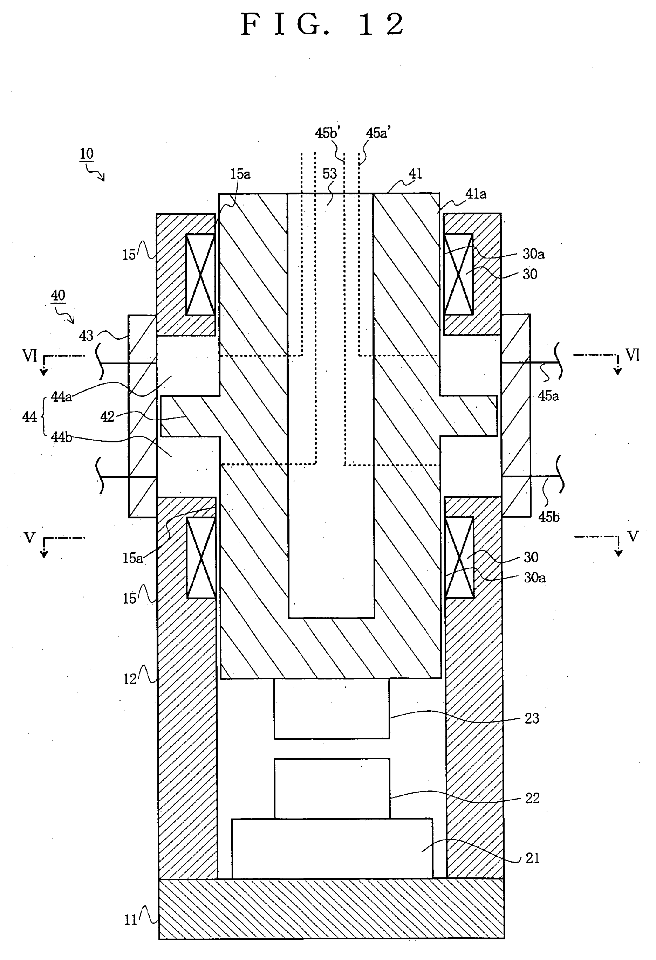

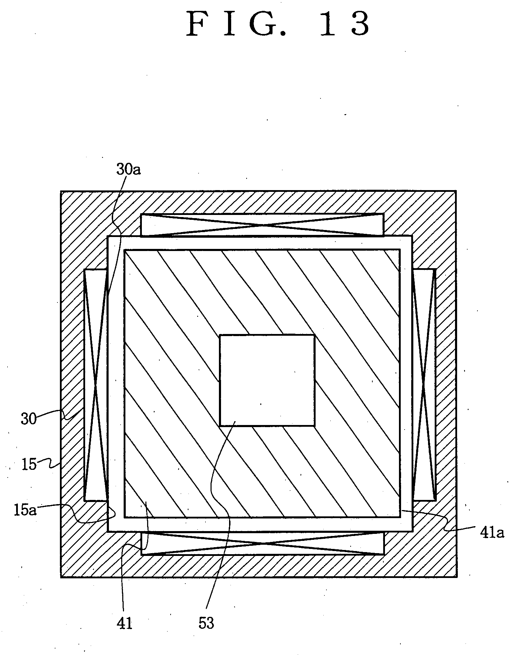

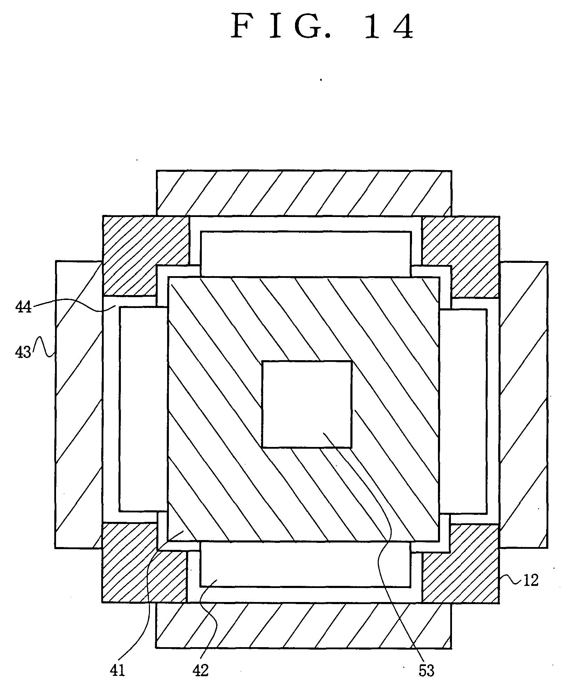

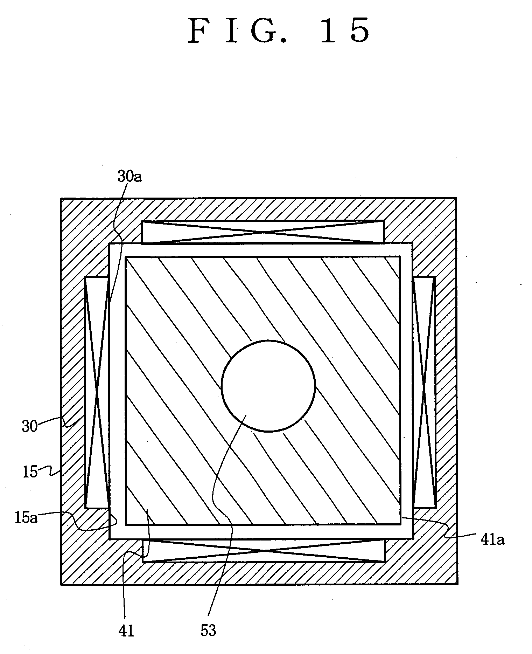

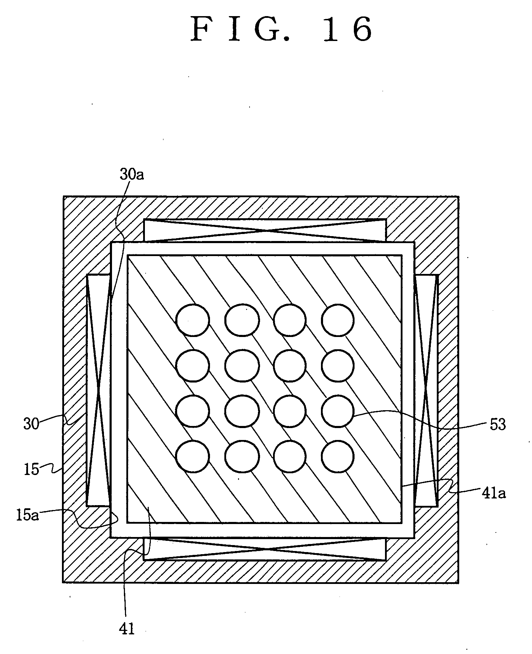

FIG. 12 is a vertical sectional view showing the configuration of a press apparatus according to the sixth embodiment of the present invention; FIG. 13 is a sectional view taken along line V-V of FIG. 12; FIG. 14 is a sectional view taken along line VI-VI of FIG. 12; FIG. 15 is a sectional view taken along line V-V of FIG. 12, showing a modification of the sixth embodiment; and FIG. 16 is a sectional view taken along line V-V of FIG. 12, showing another modification of the sixth embodiment.

In the present embodiment, as shown in FIGS. 12-14, a hollow portion 53 is formed in the movable member 41. In this case, the hollow portion 53 is an elongated hole having a rectangular cross section and extending axially in the movable member 41. The upper end of the hollow portion 53 opens at the upper end surface of the movable member 41, whereas the lower end of the hollow portion 53 is closed in the movable member 41. Notably, the upper end of the hollow portion 53 may be closed in the movable member 41. The axis of the hollow portion 53 substantially coincide with that of the movable member 41. The cross-sectional shape of the hollow portion 53 is analogous to that of the movable member 41. The length (a vertical dimension in FIG. 12) and cross-sectional area of the hollow portion 53 can be determined as appropriate.

The cross-sectional shape of the hollow portion 53 is not necessarily analogous to that of the movable member 41 and may be modified as appropriate. For example, as shown in FIG. 15, the cross-sectional shape of the hollow portion 53 may be circular. Furthermore, the cross-sectional shape of the hollow portion 53 may be elliptical, polygonal such as pentagonal or hexagonal, star-shaped, or indeterminate.

Instead of a single hollow portion 53, a plurality of hollow portions 53 may be provided. For example, as shown in FIG. 16, a number of hollow portions 53 each having a circular cross section of small diameter may be formed. Furthermore, the hollow portions 53 may each assume a hexagonal cross section and be arranged such that the distance between the adjacent hollow portions 53 is short, whereby the movable member 41 assumes a so-called honeycomb cross section.

In view of strength of the movable member 41, the cross-sectional shape of the hollow portion 53 is preferably closed as shown in FIGS. 12-16. However, the cross-sectional shape may be partially opened as needed. For example, in FIGS. 13 and 14, a slit may be formed in such a manner as to extend through the movable member 41 between a corner part of the hollow portion 53 and a corner portion of the movable member 41.

In the present embodiment, since the movable member 41 has the hollow portion 53, the weight of the movable member 41 can be reduced accordingly. As a result, the movable member 41 can be smoothly moved in the vertical direction.

Since the movable member 41 is of light weight, the movable member 41 is accurately positioned by means of the hydrostatic bearings 30. Specifically, the four guide surfaces 41a of the movable member 41 are subjected to corresponding equal forces which the four hydrostatic bearings 30 exert respectively, whereby a gap between the guide surfaces 41a of the movable member 41 and the corresponding guide surfaces 31a of the hydrostatic bearings 30 becomes constant, thereby positioning the movable member 41. When the position of the movable member 41 deviates to thereby cause a change in the gap between the guide surfaces 41a and the corresponding guide surfaces 31a, the forces which the hydrostatic bearings 30 exert on the guide surfaces 41a restore the movable member 41 to its proper position. Therefore, when the movable member 41 is of light weight, the movable member 41 can be restored promptly to its proper position upon subjection to forces exerted by the hydrostatic bearings 30 and is thus positioned accurately.

Furthermore, the hollow portion 53 permits installation of electric wiring and fluid piping therein. For example, in place of the compressed-fluid lines 45a and 45b, compressed-fluid lines 45a' and 45b' as represented by the dotted line in FIG. 12 can be attached to the movable member 41 through the hollow portion 53 in such a manner as to communicate with the upper and lower pressure chambers 44a and 44b via the guide surfaces 41a. In the case where the hydrostatic bearings 30 are disposed on the corresponding guide surfaces 41a of the movable member 41, the supply lines 37 for supplying compressed fluid to the hydrostatic bearings 30 can run through the hollow portion 53. In this case, since there is no need either to attach the compressed-fluid lines 45a and 45b to the cover member 43 or to attach the supply lines 37 to the guide member 15, the periphery of the press apparatus 10 can be tidied; the press apparatus 10 can be installed in a small place; and operability of the press apparatus 10 is enhanced. As shown in FIG. 16, when a plurality of hollow portions 53 are provided, not only is the weight of the movable member 41 reduced, but also the following advantage is yielded: since each portion between the hollow portions 53 functions as a member like a beam, even when an external force is imposed on the guide surface 41a, deflection of the guide surface 41a can be reduced to the greatest possible extent. Other features are similar to those of the third embodiment, and thus repeated description thereof is omitted.

Next, a seventh embodiment of the present invention will be described. Structural features similar to those of the first to sixth embodiments are denoted by common reference numerals, and repeated description thereof is omitted. Also, repeated description of actions and effects similar to those of the first to sixth embodiments is omitted.

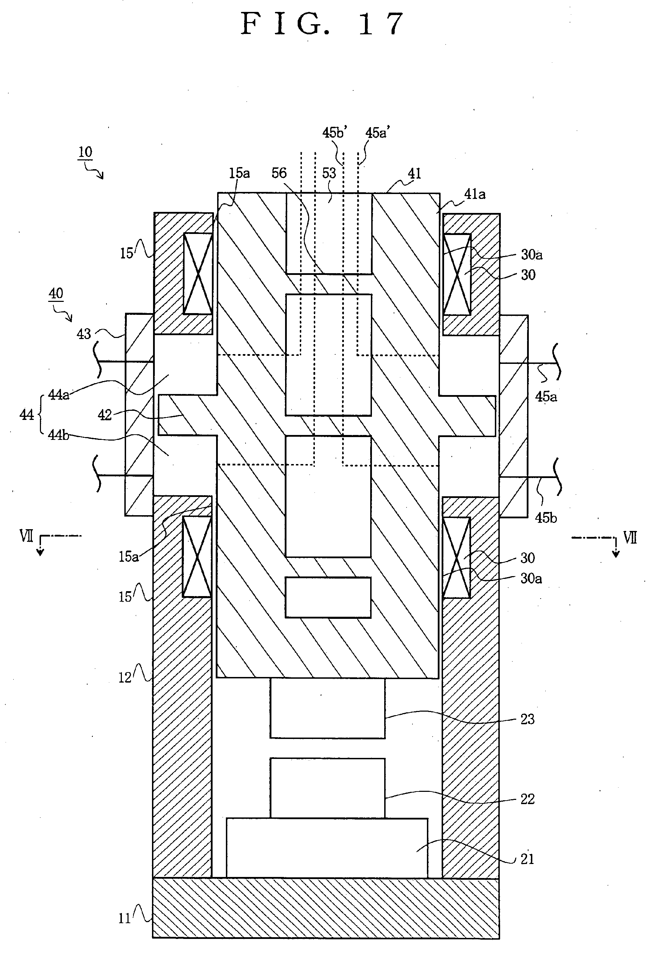

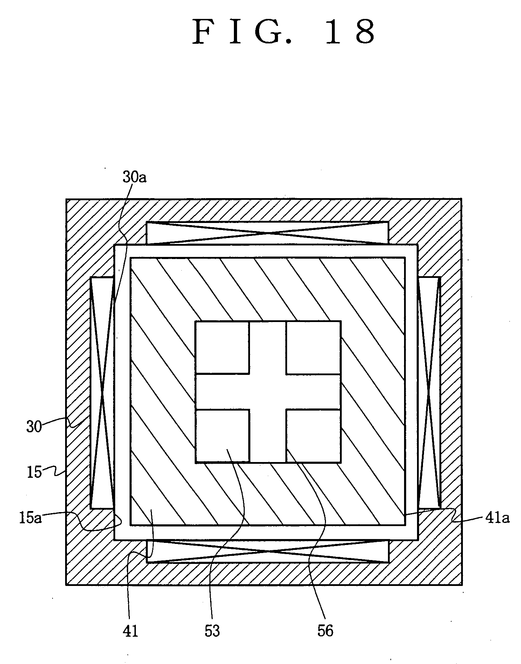

FIG. 17 is a vertical sectional view showing the configuration of a press apparatus according to the seventh embodiment of the present invention, and FIG. 18 is a sectional view taken along line VII-VII of FIG. 17.

In the present embodiment, as shown in FIGS. 17 and 18, reinforcement members 56 are disposed within the hollow portion 53. In this case, the hollow portion 53 is an elongated hole having a rectangular cross section and extending axially in the movable member 41. As shown in FIG. 18, each of the reinforcement members 56 is a cruciform member extending between each pair of opposed surfaces of the hollow portion 53. As shown in FIG. 17, the reinforcement members 56 are disposed at a plurality of corresponding positions located along the axial direction of the hollow portion 53. When the reinforcement members 56 are located at a position corresponding to the partition walls 42 and at positions corresponding to the hydrostatic bearings 30, distortion of the movable member 41 arising from the pressure of fluid used to drive the partition walls 42 and the hydrostatic bearings 30 can be reduced to the greatest possible extent.

In the present embodiment, the reinforcement members 56 are formed integrally with the movable member 41. However, the reinforcement members 56 may be formed separately from the movable member 41 and attached to the movable member 41. Also, the reinforcement member 56 may assume any shape. For example, the reinforcement member 56 may extend continuously along the axial direction of the hollow portion 53.

As described above, since the present embodiment has the reinforcement members 56 disposed in the hollow portion 53, the strength of the movable member 41 can be enhanced, thereby preventing deformation of the guide surfaces 41a. Other features are similar to those of the sixth embodiment, and thus repeated description thereof is omitted.

The first to seventh embodiments are described while mentioning a vertical press apparatus in which a mold moves in the longitudinal direction (vertical direction). However, the present invention is also applicable to a horizontal press apparatus in which a mold moves in the lateral direction (horizontal direction). Also, the present invention is applicable to not only a press apparatus in which only one of two mold halves moves, but also a press apparatus in which both of the two mold halves move. In this case, a member corresponding to the stationary member used in a press apparatus in which only one of two mold halves moves is made movable through employment of a structure similar to that of the movable member.

The first to seventh embodiments are described while mentioning the guide member and the movable member each having a rectangular cross section. However, no particular limitation is imposed on the cross-sectional shape of the guide member and that of the movable member so long as a plurality of guide surfaces are provided. For example, the cross-sectional shape may consist of a single straight line and a single arc, or two parallel straight lines and two arcs, or may be a polygon having five or more line segments. In this case, the arrangement, size, and the like of the hydrostatic bearings are adjusted such that forces imposed on the guide surfaces of the movable member from the hydrostatic bearings which face the guide surfaces are directed toward the center of the movable member and cancel each other, whereby the resultant of the forces becomes zero. Through employment of this adjustment, even when the guide member and the movable member assume any cross-sectional shape, a gap between the guide surfaces of the movable member and the corresponding guide surfaces of the hydrostatic bearings becomes constant, thereby positioning the movable member.

The above embodiments are described while mentioning the hydrostatic bearings provided on the guide member or the movable member. However, the present invention may provide the function of the hydrostatic bearings without use of the hydrostatic bearings in the following manner: outlet ports for introducing compressed fluid are directly provided in the guide member or the movable member.

The above embodiments are described while mentioning dry air, nitrogen gas, or the like for use as compressed fluid. However, liquid may be used as compressed fluid according to articles to be molded. For example, liquid such as pure water may be used.

The present invention is not limited to the above-described embodiments. Numerous modifications and variations of the present invention are possible in light of the spirit of the present invention, and they are not excluded from the scope of the present invention.

The disclosure of Japanese Patent Application No. 2002-179809 filed June 20, 2002 and No. 2003-87998 filed March 27, 2003 including specification, drawings and claims are incorporated herein by reference in its entirety.

## Claims

1. A press apparatus comprising:
(a) a movable member having a mold-mounting surface for mounting a movable mold thereon and guide surfaces; and
(b) a guide member having guide surfaces facing the corresponding guide surfaces of the movable member, wherein
(c) the movable member and the guide member each have four guide surfaces, and fluid is injected into a space formed between the guide surfaces of the movable member and the corresponding guide surfaces of the guide member such that the mutually facing guide surfaces are held in a noncontacting condition.

2. A press apparatus according to claim 1, wherein the guide surfaces of the movable member or the guide surfaces of the guide member are equipped with corresponding hydrostatic bearings.

3. A press apparatus according to claim 1, further comprising a hollow portion formed in the movable member.

4. A press apparatus according to claim 3, further comprising a reinforcement member disposed within the hollow portion.

5. A press apparatus according to claim 1, further comprising a plurality of the hollow portions formed in the movable member.

6. A press apparatus according to claim 1, wherein a pressure chamber of a drive unit is formed; the movable member comprises partition wall disposed within the pressure chamber, such that the partition wall is moved by means of pressure of the second fluid to be supplied into the pressure chamber.

7. A press apparatus according to claim 6, wherein the movable member comprises a hollow portion; piping for supplying the first fluid to the hydrostatic bearings or piping for supplying the second fluid to the pressure chamber runs in the hollow portion.

8. A press apparatus according to claim 6, wherein the movable member comprises a hollow portion; the movable member comprises a reinforcement member disposed within the hollow portion; at least one of the reinforcement member is disposed within the hollow portion to a position corresponding to a position of the partition wall.

9. A press apparatus according to claim 1, wherein the guide member comprises a pair of opposed first guide members, and a pair of opposed second guide members held between the first guide members, and a distance between the opposed first guide members and a distance between the opposed second guide members can be adjusted.

10. A press apparatus according to claim 9, wherein a pressure chamber of a drive unit is formed; the movable member comprises partition wall disposed within the pressure chamber such that the partition wall is moved by means of pressure of fluid to be supplied into the pressure chamber.

11. A press apparatus according to claim 2, wherein forces imposed on the movable member from the hydrostatic bearings are directed toward a center axis of the movable member such that the sum of said forces is null.

12. A press method for using a movable member and a guide member comprising the steps of:
(a) injecting fluid into a space formed between four base guide surfaces of the guide member and four movable surfaces of the movable member which correspond with the four guide surfaces, and
(b) holding the movable member in noncontacting condition so that a center axis of a movable mold mounted on the movable member is immovable.

13. A press method according to claim 12, wherein the movable guide surfaces or the base guide surfaces are equipped with corresponding hydrostatic bearings.

14. A press method according to claim 12, wherein the movable member comprises a hollow portion.

15. A press method according to claim 14, wherein the movable member comprises a reinforcement member disposed within the hollow portion.

16. A press method according to claim 13, wherein the movable member comprises a plurality of the hollow portions formed in the movable member.

17. A press method according to claim 13, further comprising the steps of;
(a) heating a material to a predetermined temperature,
(b) supplying second fluid into a first pressure chamber,
(c) moving the movable mold to a base mold mounted on a base member,
(d) molding the material between the movable mold and the base mold under molding force,
(e) supplying the second fluid into a second pressure chamber, and
(f) separating the movable mold from the base mold.

18. A press method according to claim 17, wherein the movable member comprises a hollow portion; piping for supplying the fluid to the hydrostatic bearings or the pressure chamber runs in the hollow portion.

19. A press method according to claim 17, wherein the movable member comprises a hollow portion; the movable member comprises a reinforcement member disposed within the hollow portion; at least one of the reinforcement member is disposed within the hollow portion to a position corresponding to a position of the partition wall.

20. A press method according to claim 13, further comprising the steps of;
(a) cooling the material to transitional point of glass or below after molding step, and
(b) pressing the material under a predetermined force which is smaller than the molding force during cooling step.
